# EUROPÄISCHE PATENTSCHRIFT

(11) **EP 3 901 433 B1**
(45) Veröffentlichungstag und Bekanntmachung des Hinweises auf die Patenterteilung: **12.07.2023**
(21) Anmeldenummer: 21163306.0
(22) Anmeldetag: 18.03.2021
(51) Int. Cl.: F01N 3/027, F01N 3/20

(54) **ABGASHEIZER**
EXHAUST HEATER
CHAUFFAGE DE GAZ D'ÉCHAPPEMENT

(30) Priorität: 22.04.2020 DE 102020110869
(43) Veröffentlichungstag der Anmeldung: 27.10.2021
(73) Patentinhaber: Purem GmbH, 66539 Neunkirchen (DE)
(72) Erfinder: Kurpejovic, Enver, 73230 Kirchheim unter Teck (DE); Uysal, Fatih, 73207 Plochingen (DE); Prommersberger, Holger, 70825 Korntal-Münchingen (DE); Kuschel, Dietmar, 71711 Murr (DE); Höckel, Sandra, 73730 Esslingen (DE)
(74) Vertreter: Ruttensperger Lachnit Trossin Gomoll

(56) Entgegenhaltungen:
- WO-A1-90/12201
- WO-A1-2014/100118
- JP-A- H04 164 115
- US-A- 4 548 625

## Beschreibung

Die vorliegende Erfindung betrifft einen Abgasheizer für eine Abgasanlage einer Brennkraftmaschine, welcher insbesondere dazu genutzt werden kann, das auf eine Katalysatoreinheit zu strömende Abgas zu erwärmen.

In Fig. 1 ist ein Abschnitt einer aus der nachveröffentlichten deutschen Patentanmeldung DE 10 2019 131 556 bekannten und allgemein mit 10 bezeichneten Abgasanlage einer Brennkraftmaschine insbesondere in einem Fahrzeug dargestellt. Die Abgasanlage 10 umfasst eine beispielsweise als Abgasrohr ausgebildete Abgasführungskomponente 12, in welcher in dem dargestellten Längenbereich ein Abgasheizer 14 angeordnet ist. In einer Abgashauptströmungsrichtung H stromabwärts bezüglich des Abgasheizers 14 eine ein Beispiel einer Abgasbehandlungseinheit repräsentierende Katalysatoreinheit angeordnet. Die Katalysatoreinheit kann einen mit katalytisch wirksamem Material beschichteten Katalysatorblock umfassen, der beispielsweise durch eine Fasermatte oder dergleichen stabil in der Abgasführungskomponente 12 gehalten ist.

Der Abgasheizer 14 umfasst einen als Blechumformteil ausgebildeten Träger 22. Der Träger 22 weist einen bezüglich einer Heizer-Längsachse A radial außen liegenden Außenumfangsbereich 24 und einen bezüglich der Heizer-Längsachse A zentriert liegenden Zentralbereich 26 auf. Zwischen dem Außenumfangsbereich 24 und dem Zentralbereich 26 erstreckt sich ein allgemein mit 28 bezeichneter Tragebereich des Trägers 22. Dieser Tragebereich 28 weist eine im Wesentlichen konische bzw. kegelartige oder trichterartige Formgebung auf, so dass der Außenumfangsbereich 24 und der Zentralbereich 26 in Richtung der Heizer-Längsachse A zueinander axial versetzt liegen. Im radial äußeren Bereich des Trägers 22 weist dieser vom Außenumfangsbereich 24 ausgehend eine Mehrzahl von Befestigungsabschnitten auf. Diese sind axial abgebogen und liegen an einer Innenumfangsfläche der Abgasführungskomponente 12 an und sind daran beispielsweise durch Verschweißung oder Verlötung festgelegt.

Der Träger 22 weist Verbindungsstege 36 auf, die den beispielsweise ringartig ausgebildeten Außenumfangsbereich 24 mit dem Zentralbereich 26 verbinden. Jeder der vier Verbindungsstege 36 erstreckt sich näherungsweise geradlinig von radial außen nach radial innen. In Umfangsrichtung zwischen zwei jeweils einander unmittelbar benachbarten Verbindungsstegen 36 sind radial gestaffelt mehrere näherungsweise in Umfangsrichtung sich zwischen zwei Verbindungsstegen 36 erstreckendeckende Durchströmöffnungen 38 gebildet.

Der Abgasheizer 14 umfasst ferner einen Heizleiter 42. Der Heizleiter 42 weist einen an einer in Richtung stromaufwärts orientierten axialen Seite 34 des Trägers 22 bzw. des Tragebereichs 28 desselben angeordneten, im Wesentlichen nicht elektrisch isolierten Heizbereich 44 auf. In diesem Heizbereich 44 erstreckt der Heizleiter 42 sich, ausgehend von einem im Bereich des Außenumfangsbereichs 24 des Trägers 22 positionierten radial äußeren Endabschnitt zu einem im Bereich des Zentralbereichs 26 liegenden radial inneren Endabschnitt mit spiralartig gewundener Struktur. Aufgrund der spiralartig gewundenen Struktur weist der Heizbereich 44 des Heizleiters 42 eine Mehrzahl von radial gestaffelt angeordneten Windungsabschnitten 20 auf. An der in Richtung stromabwärts orientierten Rückseite des Trägers 22 kann ein radial innen an den Heizbereich 44 anschließender Verbindungsbereich des Heizleiters 42 sich nach radial außen erstrecken und mit einem weiteren radial außen an den Heizbereich 44 anschließenden Verbindungsbereich durch die Abgasführungskomponente 12 hindurch geführt sein, um zwei elektrische Anschlusskontakte 30, 32 bereitzustellen

Mit seinem Heizbereich 44 ist der Heizleiter 42 durch eine Halteanordnung 16 an dem Träger 22 festgelegt. Die Halteanordnung 16 umfasst insbesondere im Bereich der Verbindungsstege 36 vorgesehene Gruppen von Halteelementen 18. Jedes Halteelement 18 umgibt den Heizleiter 42 im Bereich eines jeweiligen Windungsabschnitts 20 in seinem mit einer am Träger 22 beispielsweise durch Verschweißen festgelegten Metallhülse 46. Um den nicht elektrisch isolierten Heizbereich 44 bezüglich des Trägers 22 elektrisch zu isolieren, ist im Inneren der Metallhülsen 46 Isoliermaterial vorgesehen, welches den Heizbereich 44 im Bereich eines jeweiligen Windungsabschnitts 20 umgibt und eine elektrische Isolierung zwischen dem Heizbereich 44 und einer jeweiligen Metallhülse 46 bereitstellt.

Aus der US 4,548,625 A ist ein Abgasheizer gemäß dem Oberbegriff des Anspruchs 1 bekannt. Bei diesem bekannten Abgasheizer ist ein elektrisch nicht isolierter Heizleiter in seinem Heizbereich an einer Mehrzahl von elektrisch nicht leitenden Armen getragen. In jedem der Arme sind in Zuordnung zu mehreren Abschnitten eines Heizleiters Aussparungen vorgesehen. In jeder Aussparung ist ein den darin jeweils verlaufenden Abschnitt des Heizleiters in der Aussparung haltendes Einsatzelement beispielsweise aus Stahlmaterial aufgenommen.

Es ist die Aufgabe der vorliegenden Erfindung, einen Abgasheizer so auszugestalten, dass bei hoher Wärmeübertragungseffizienz eine lokale Überhitzung eines Heizleiters des Abgasheizers vermieden wird.

Erfindungsgemäß wird diese Aufgabe gelöst durch einen Abgasheizer für eine Abgasanlage einer Brennkraftmaschine, umfassend:
- einen Träger, vorzugsweise mit einem bezüglich einer Heizer-Längsachse radial außen angeordneten Außenumfangsbereich und einem Zentralbereich,
- einen an dem Träger getragenen Heizleiter, wobei der Heizleiter einen an einer axialen Seite des Trägers angeordneten Heizbereich umfasst, wobei der Heizleiter in seinem Heizbereich wenigstens bereichsweise nicht elektrisch isoliert ist,
- eine Halteanordnung mit wenigstens einer den Heizleiter in seinem Heizbereich an dem Träger haltenden Halteeinheit.

Die wenigstens eine Halteeinheit umfasst wenigstens einen den Heizleiter in einem nicht elektrisch isolierten Bereich des Heizbereichs berührenden, elektrisch leitenden Halteblock, wobei der wenigstens eine Halteblock bezüglich des Trägers elektrisch isoliert ist.

Die Aufnahme des Heizbereichs in einem jeweiligen Halteblock ist in einfacher Weise dadurch realisiert, dass der wenigstens eine Halteblock zwei den Heizbereich zwischen sich aufnehmende Halteblockteile umfasst.

Bei dem erfindungsgemäßen Aufbau wird der nicht elektrisch isolierte Heizbereich durch einen oder mehrere elektrisch leitende Halteblöcke kontaktiert und über diese am Träger gehalten. Jeder somit in elektrisch leitender Verbindung mit dem Heizbereich stehende Halteblock ist zu dem Heizbereich elektrisch parallel geschaltet und ermöglicht einen den Heizbereich in dem vom Halteblock umgriffenen Längenbereich umgehenden Stromfluss mit der Folge, dass der elektrische Strom aufgrund der elektrisch leitenden Eigenschaft eines jeweiligen Halteblocks primär durch den Halteblock und nicht den vom Halteblock umgriffenen Längenbereich des Heizbereichs fließen wird. Die Folge davon ist, dass in diesem von einem Halteblock umgriffenen Längenbereich der Heizbereich des Heizleiters sich nicht oder nur wenig erwärmen wird und somit ein Wärmestau in diesem Bereich und damit eine Überhitzung des Heizleiters vermieden wird.

Für eine stabile Halterung kann der wenigstens eine Halteblock eine den Heizleiter aufnehmende Heizleiter-Aufnahmeaussparung aufweisen.

Um dabei eine lokale Überlastungen vermeidende flächige Anlage zu erzeugen, kann eine Innenkontur der Aufnahmeaussparung an eine Außenumfangskontur des Heizleiters angepasst sein.

Dabei kann eine gleichmäßige Haltewechselwirkung mit dem Heizbereich dadurch erreicht werden, dass in jedem der Halteblockteile ein Teilbereich der Aufnahmeaussparung ausgebildet ist.

Um zu gewährleisten, dass ein großer Teil des durch den Heizleiter fließenden Stroms durch den bzw. die Halteblöcke geleitet wird, wird vorgeschlagen, dass der wenigstens eine Halteblock aus Metallmaterial, vorzugsweise Stahlmaterial, aufgebaut ist, oder/und dass der wenigstens eine Halteblock einen spezifischen Widerstand von weniger als 1 Ωmm²/m aufweist.

Die erforderliche elektrische Isolierung insbesondere bezüglich des Trägers kann dadurch erreicht werden, dass zwischen dem wenigstens einen Halteblock und dem Träger Isoliermaterial angeordnet ist.

Zur stabilen Halterung an dem Träger kann der wenigstens eine Halteblock durch einen Haltebügel an dem Träger gehalten sein.

Dabei kann ein einfach zu realisierender, gleichwohl die erforderliche elektrische Isolierung gewährleistender Aufbau dadurch sichergestellt werden, dass der Haltebügel als Metallbauteil, vorzugsweise Blechformteil, ausgebildet ist, und dass zwischen dem wenigstens einen Halteblock und dem Haltebügel Isoliermaterial angeordnet ist.

Das Isoliermaterial kann Keramikmaterial oder Glimmer-Material umfassen. Derartiges Material ist nicht nur in der Lage, die erforderliche elektrische Isolierung zu erreichen, sondern ist auch gegenüber den im Betrieb auftretenden mechanischen und thermischen Belastungen resistent.

Der Haltebügel kann durch wenigstens ein Befestigungsorgan, vorzugsweise Schraubbolzen, an dem Träger festgelegt sein.

Für einen einfachen, stabilen, gleichwohl jedoch auch kostengünstig zu realisierenden Aufbau wird vorgeschlagen, dass der Träger als Metallbauteil, vorzugsweise Blechformteil, ausgebildet ist.

Eine große Oberfläche zur thermischen Wechselwirkung mit dem Abgas bzw. einer Abgasbehandlungseinheit, wie zum Beispiel einem Katalysator, kann dadurch erreicht werden, dass der Heizleiter in seinem Heizbereich spiralartig gewunden ist und eine Mehrzahl von radial gestaffelt liegenden Windungsabschnitten umfasst.

Um dabei eine stabile Halterung des Heizleiters zu erreichen, kann wenigstens eine Halteeinheit eine Mehrzahl von Halteblöcken umfassen, wobei jeder Halteblock wenigstens einen Windungsabschnitt umgreift. Weiter kann vorgesehen sein, dass der Haltebügel die Mehrzahl von Halteblöcken an ihrer von dem Träger abgewandten Seite übergreift, oder/und dass der Haltebügel sich entlang der Mehrzahl von Halteblöcken im Wesentlichen radial erstreckt.

Der Träger kann eine Mehrzahl von mit Umfangsabstand zueinander angeordneten und einen Zentralbereich mit einem Außenumfangsbereich verbindenden Verbindungsstegen umfassen, wobei zwischen in Umfangsrichtung einander unmittelbar benachbarten Verbindungsstegen Durchströmöffnungen gebildet sind, wobei wenigstens eine Halteeinheit im Bereich eines Verbindungsstegs angeordnet ist.

Die Erfindung betrifft ferner eine Abgasanlage, umfassend eine vorzugsweise rohrartige Abgasführungskomponente und einen in der Abgasführungskomponente angeordneten Abgasheizer nach einem der vorangehenden Ansprüche.

Die vorliegende Erfindung wird nachfolgend mit Bezug auf die beiliegenden Figuren detailliert beschrieben. Es zeigt:
- Fig. 1: eine perspektivische Ansicht eines Teils einer Abgasanlage für eine Brennkraftmaschine mit einem Abgasheizer;
- Fig. 2: einen Teilbereich eines Abgasheizers mit einem durch eine Halteeinheit einer Halteanordnung an einem Träger gehaltenen Heizleiter;
- Fig. 3: eine vergrößerte Detailansicht der in Fig. 2 dargestellten Halteeinheit.

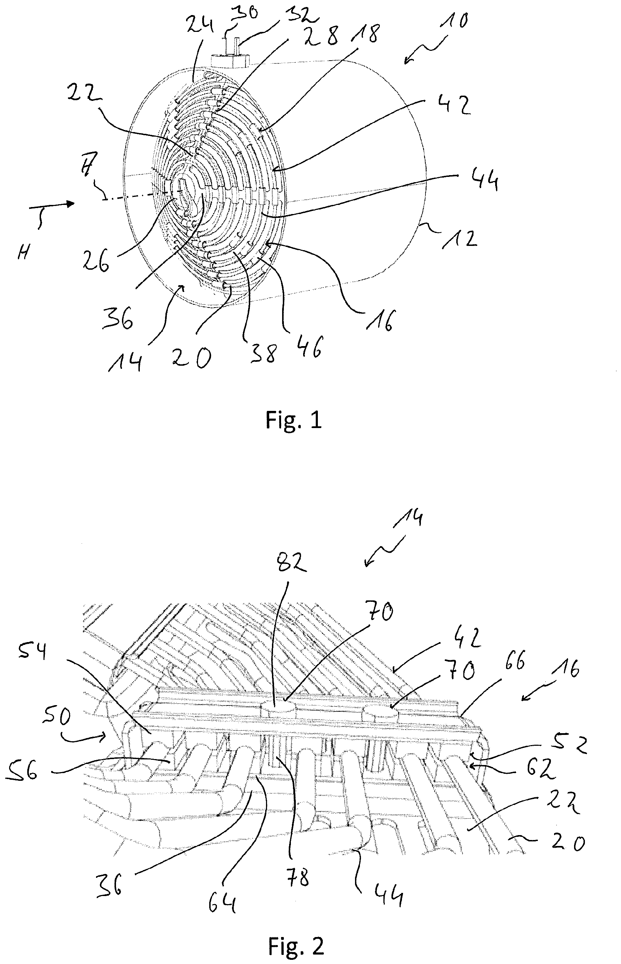

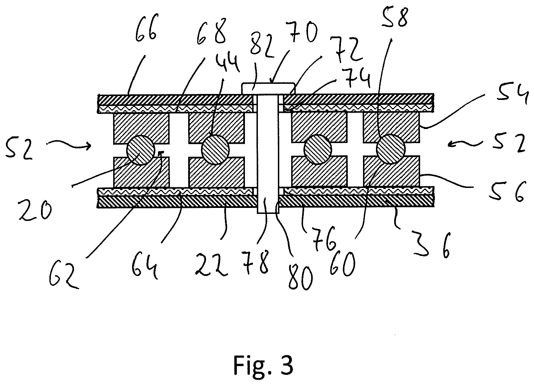

Nachfolgend wird mit Bezug auf die Fig. 2 und 3 der Aufbau eines Abgasheizers 14 beschrieben. Komponenten, welche vorangehend mit Bezug auf die Fig. 1 beschriebenen Komponenten hinsichtlich Aufbau bzw. Funktion entsprechen, sind mit den gleichen Bezugszeichen bezeichnet. Es ist darauf hinzuweisen, dass die Eingliederung eines Abgasheizers 14, wie er nachfolgend mit Bezug auf die Fig. 2 und 3 beschrieben werden kann, in eine Abgasanlage einer Brennkraftmaschine so realisiert sein kann, wie vorangehend mit Bezug auf die Fig. 1 beschrieben. Es wird daher diesbezüglich auf die Ausführungen zur Fig. 1 verwiesen.

Bei dem in den Fig. 2 und 3 dargestellten Aufbau eines Abgasheizers 14 wird der Heizleiter 42 bzw. der spiralartig gewundene und somit eine Mehrzahl von radial gestaffelt zueinander liegenden Windungsabschnitten 20 aufweisende und vorzugsweise vollständig nicht von einem elektrisch isolierenden Mantel umgebene, also im Wesentlichen nicht elektrisch isolierte Heizbereich 44 desselben durch eine Mehrzahl von in Umfangsrichtung verteilt, beispielsweise jeweils im Bereich eines Verbindungsstegs 36 angeordneten Halteeinheiten 50 der Halteanordnung 16 am Träger 22 gehalten. Jede derartige Halteeinheit 50 erstreckt sich im Wesentlichen von radial innen nach radial außen entlang eines jeweiligen Verbindungsstegs 36 und umfasst beispielsweise in Zuordnung zu jedem der radial gestaffelt liegenden Windungsabschnitte 20 des Heizbereichs 44 einen elektrisch leitenden Halteblock 52. Im dargestellten Ausgestaltungsbeispiel ist jeder der mit Abstand zueinander angeordneten Halteblöcke 52 mit zwei zueinander beispielsweise identisch gestalteten Halteblockteilen 54, 56 ausgebildet, welche zwischen sich einen jeweiligen Windungsabschnitt 20 des Heizbereichs 44 aufnehmen. Um eine stabile, flächige und Überlastungen vermeidende Aufnahme zwischen den beiden Halteblockteilen 54, 56 zu ermöglichen, weist jedes der Halteblockteile einen Teilbereich 58, 60 einer allgemein mit 62 bezeichneten und an die Außenumfangskontur des Heizbereichs 44 des Heizleiters 42 angepassten Aufnahmeaussparung auf. Im dargestellten Beispiel weist der der Heizleiter 42 in seinem Heizbereich 44 eine kreisrunde Außenumfangskontur auf, so dass auch jeder Teilbereich 58, 60 der Aufnahmeaussparung 62 eine entsprechende konkave, kreissegmentartige Geometrie aufweist.

Zwischen dem als Blechformteil aufgebauten Träger 22 und den Halteblöcken 52 bzw. den Halteblockteilen 56 derselben ist eine Lage von Isoliermaterial 64 angeordnet. Das Isoliermaterial 64 kann plattenartig ausgebildet sein und im Wesentlichen entlang der Halteblöcke 52 sich an dem zugeordneten Verbindungssteg 36 abstützen. Durch das beispielsweise mit Keramikmaterial oder Glimmer-Material bereitgestellte und somit einen sehr hohen elektrischen Widerstand aufweisende Isoliermaterial 64 sind die Halteblöcke 52 bezüglich des Trägers 22 elektrisch isoliert.

Um die Halteblöcke 52 stabil am Träger 22 zu haltern, ist ein beispielsweise ebenfalls als Blechformteil bereitgestellter Haltebügel 66 vorgesehen. Auch der Haltebügel 66 erstreckt sich im Wesentlichen in radial Richtung entlang der Halteblöcke 52 bzw. des zugeordneten Verbindungsstegs 36. Zwischen dem Haltebügel 66 und den Halteblockteilen 54 der Halteblöcke 52 ist eine Lage von Isoliermaterial 68 angeordnet. Auch dieses beispielsweise plattenartig ausgebildete Isoliermaterial, beispielsweise Keramikmaterial oder Glimmer-Material, erstreckt sich entlang der Halteblöcke 52 und stellt eine elektrische Isolierung zwischen den Halteblöcken 52 bzw. den Halteblockteilen 54 derselben und dem Haltebügel 66 bereit.

Der Haltebügel 66 ist im dargestellten Beispiel durch zwei Befestigungsorgane 70 am Träger 22 festgelegt. Die beispielsweise als Schraubbolzen ausgebildeten Befestigungsorgane 70 sind durch Öffnungen 72, 74 und 76 im Haltebügel 66, der Lage von Isoliermaterial 68 und der Lage von Isoliermaterial 64 hindurchgeführt. Ein zumindest bereichsweise mit Außengewinde ausgebildeter Schaftbereich 78 ist beispielsweise in eine Innengewindeöffnung 80 des Trägers 22 eingeschraubt. Ein Kopf 82 eines jeweiligen Befestigungsorgans 70 stützt sich an der vom Träger 22 abgewandten Seite des Haltebügels 66 ab und presst diesen somit unter Zwischenlagerung der beiden Lagen von Isoliermaterial 64, 68, der Halteblockteile 54, 56 und der dazwischen jeweils positionierten Windungsabschnitte 20 des Heizbereichs 44 in Richtung auf den Träger 22 zu. Auf diese Art und Weise ist der Heizbereich 44 elektrisch isoliert am Träger 22 gehalten.

Die Haltewirkung zwischen den Befestigungsorganen 70 und dem Träger 22 könnte beispielsweise auch dadurch realisiert sein, dass diese in ihren über den Träger 22 hinausgreifenden Schaftbereichen 78 in eine bezüglich des Trägers 22 sich abstützende Mutter eingeschraubt sind. Alternativ oder zusätzlich können die Befestigungsorgane beispielsweise dadurch gegen Lockern gesichert werden, dass sie durch Materialschluss, beispielsweise Verschweißung, mit ihren Schaftbereichen 78 beispielsweise bezüglich des Trägers 22 bzw. derartigen Muttern arretiert werden. Ferner könnte zwischen der Lage von Isoliermaterial 64 und dem Träger 22 ein weiterer Haltebügel positioniert sein, welcher im Wesentlichen dem Haltebügel 66 entspricht, so dass die beiden Lagen von Isoliermaterial 64, 68, die Halteblockteile 54, 56 und die dazwischen jeweils positionierten Windungsabschnitte 20 des Heizbereichs 44 zwischen zwei derartigen beispielsweise durch ein oder mehrere der Befestigungsorgane 70 gegeneinander verspannte Haltebügel gehalten sind. Diese Baugruppe kann dann durch diese Befestigungsorgane oder andere, zusätzliche Befestigungsorgane am Träger 22 festgelegt werden.

Die Halteblöcke 52 sind aus elektrisch leitendem Material aufgebaut, das einen sehr geringen spezifischen Widerstand und insbesondere aufgrund der Dimensionierung auch einen geringen Gesamtwiderstand aufweist. Da die Halteblöcke 52 den elektrisch nicht isolierten Heizbereich 44 des Heizleiters 42 vorzugsweise im Wesentlichen jeweils entlang des ganzen von diesen umgriffenen Längenabschnitts der Windungsabschnitte 20 berühren, bilden sie einen parallelen Weg für den durch den Heizbereich 44 geleiteten elektrischen Strom im Bereich der von den Halteblöcken 52 umgriffenen Längenabschnitte des Heizbereichs 44. Insbesondere kann dabei vorgesehen sein, dass der durch die Halteblöcke 52 bereitgestellte elektrische Widerstand geringer ist, als der elektrische Widerstand des Heizbereichs 44 in den von den Halteblöcken 52 umgriffenen Längenbereichen, so dass der elektrische Strom aufgrund der Parallelschaltung der Halteblöcke 52 und der Windungsabschnitte 20 primär durch die Halteblöcke 52 fließen wird. Die Folge davon ist, dass aufgrund des vergleichsweise geringen Stromflusses durch die von den Halteblöcken 52 umgriffenen Längenabschnitte des Heizbereichs 44 der als Widerstandsleiter ausgebildete Heizleiter 42 in diesen Längenbereichen sich nicht oder nur vergleichsweise gering erwärmen wird. Die Gefahr, dass in den zum Erzeugen der Haltewechselwirkung umgriffenen Längenabschnitten des Heizbereichs 44 ein möglicherweise zu einer Beschädigung des Heizleiters 42 führender Wärmestau entsteht, ist somit nicht vorhanden. Eine Überhitzung in diesen Bereichen kann nicht auftreten.

Die Halteanordnung bzw. die Halteeinheiten derselben können von der vorangehend beschriebenen bzw. in den Figuren dargestellten Ausgestaltung abweichend aufgebaut sein. So können die Halteblöcke beispielsweise einstückig ausgebildet sein und eine schlitzartige Öffnung zur Aufnahme der Windungsabschnitte des Heizbereichs aufweisen. Auch können die Blöcke als Hülsen- oder Rohrabschnitte ausgebildet sein, welche den Heizbereich umgebend positioniert werden können. Der Heizbereich selbst könnte bereichsweise elektrisch isoliert sein, wobei aufgrund der vorteilhaften thermischen Wechselwirkung mit dem den Heizbereich umströmenden Abgas der Heizbereich vorzugsweise vollständig nicht elektrisch isoliert ist. Bei teilweiser elektrischer Isolierung ist der Heizbereich zumindest dort, wo dieser in Haltewechselwirkung mit den Halteeinheiten steht, nicht elektrisch isoliert, um den vorangehend beschriebenen Effekt der Erzeugung eines parallelen Weges für den der Heizleiter durchfließenden elektrischen Strom erhalten zu können. Zumindest ein Teil des elektrischen Stroms wird auch bei dieser Ausgestaltung durch die von den Halteblöcken 52 umgriffenen Längenabschnitte des Heizbereichs 44 fließen, so dass zumindest eine geringfügige Erwärmung nicht vermieden werden kann. Aufgrund des Kontakts mit den elektrisch leitenden und beispielsweise aus Metallmaterial, wie z. B. Stahlmaterial, aufgebauten Halteblöcken 52 weisen diese auch eine gute thermische Leitfähigkeit auf, so dass die im Bereich der von den Halteblöcken 52 umgriffenen Längenabschnitte des Heizbereichs 44 generierte Wärme durch Wärmeleitung und auch Wärmeabstrahlung über die Heizblöcke 52 gut abgeführt werden kann. Um einen elektrischen Kurzschluss zwischen zueinander radial gestaffelt und einander unmittelbar benachbart liegenden Windungsabschnitten zu vermeiden, sind die diesen Windungsabschnitten 20 zugeordneten Halteblöcke 52 nicht in direktem gegenseitigen Kontakt

Die in Umfangsrichtung verteilt angeordneten Halteeinheiten 50 können zueinander unterschiedlich gestaltet bzw. in radialer Richtung unterschiedlich dimensioniert sein und jeweils nur einen Radialbereich des Heizbereichs 44 am Träger 22 halten. So könnten beispielsweise in Umfangsrichtung alternierend Halteeinheiten 50 vorgesehen sein, welche den radial inneren Bereich des Heizbereichs 44 am Träger 22 halten, und Halteeinheiten 50, welche den radial äußeren Bereich des Heizbereichs 44 am Träger 22 halten, wobei der radial innere Bereich und der radial äußere Bereich näherungsweise jeweils den halben radialen Erstreckungsbereich des Heizbereichs 44 umfassen können.

## Patentansprüche

1. Abgasheizer für eine Abgasanlage einer Brennkraftmaschine, umfassend:
- einen Träger (22),
- einen an dem Träger (22) getragenen Heizleiter (42), wobei der Heizleiter (42) einen an einer axialen Seite des Trägers (22) angeordneten Heizbereich (44) umfasst, wobei der Heizleiter (42) in seinem Heizbereich (44) wenigstens bereichsweise nicht elektrisch isoliert ist,
- eine Halteanordnung (16) mit wenigstens einer den Heizleiter (42) in seinem Heizbereich (44) an dem Träger (22) haltenden Halteeinheit (50),
wobei die wenigstens eine Halteeinheit (50) wenigstens einen den Heizleiter (42) in einem nicht elektrisch isolierten Bereich des Heizbereichs (44) berührenden, elektrisch leitenden Halteblock (52) umfasst, wobei der wenigstens eine Halteblock (52) bezüglich des Trägers (22) elektrisch isoliert ist,
**dadurch gekennzeichnet, dass** der wenigstens eine Halteblock (52) zwei den Heizbereich (44) zwischen sich aufnehmende Halteblockteile (54, 56) umfasst.

2. Abgasheizer nach Anspruch 1, **dadurch gekennzeichnet, dass** der wenigstens eine Halteblock (52) eine den Heizleiter (42) aufnehmende Heizleiter-Aufnahmeaussparung (62) aufweist,
vorzugsweise wobei eine Innenkontur der Heizleiter-Aufnahmeaussparung (62) an eine Außenumfangskontur des Heizleiters (42) angepasst ist.

3. Abgasheizer nach Anspruch 2, **dadurch gekennzeichnet, dass** in jedem der Halteblockteile (54, 56) ein Teilbereich (58, 60) der Heizleiter-Aufnahmeaussparung (62) ausgebildet ist.

4. Abgasheizer nach einem der vorangehenden Ansprüche, **dadurch gekennzeichnet, dass** der wenigstens eine Halteblock (52) aus Metallmaterial, vorzugsweise Stahlmaterial, aufgebaut ist, oder/und dass der wenigstens eine Halteblock (52) einen spezifischen Widerstand von weniger als 1 Ωmm²/m aufweist.

5. Abgasheizer nach Anspruch 4, **dadurch gekennzeichnet, dass** zwischen dem wenigstens einen Halteblock (52) und dem Träger (22) Isoliermaterial (64) angeordnet ist.

6. Abgasheizer nach einem der vorangehenden Ansprüche, **dadurch gekennzeichnet, dass** der wenigstens eine Halteblock (52) durch einen Haltebügel (66) an dem Träger (22) gehalten ist.

7. Abgasheizer nach Anspruch 6, **dadurch gekennzeichnet, dass** der Haltebügel (66) als Metallbauteil, vorzugsweise Blechformteil, ausgebildet ist, und dass zwischen dem wenigstens einen Halteblock (52) und dem Haltebügel (66) Isoliermaterial (68) angeordnet ist.

8. Abgasheizer nach Anspruch 5 oder Anspruch 7, **dadurch gekennzeichnet, dass** das Isoliermaterial (64, 68) Keramikmaterial oder Glimmer-Material umfasst.

9. Abgasheizer nach Anspruch 6, 7 oder 8, **dadurch gekennzeichnet, dass** der Haltebügel (66) durch wenigstens ein Befestigungsorgan (70), vorzugsweise Schraubbolzen, an dem Träger festgelegt ist.

10. Abgasheizer nach einem der vorangehenden Ansprüche, **dadurch gekennzeichnet, dass** der Träger (22) als Metallbauteil, vorzugsweise Blechformteil, ausgebildet ist.

11. Abgasheizer nach einem der vorangehenden Ansprüche, **dadurch gekennzeichnet, dass** der Heizleiter (42) in seinem Heizbereich (44) spiralartig gewunden ist und eine Mehrzahl von radial gestaffelt liegenden Windungsabschnitten (20) umfasst.

12. Abgasheizer nach Anspruch 11, **dadurch gekennzeichnet, dass** wenigstens eine Halteeinheit (50) eine Mehrzahl von Halteblöcken (52) umfasst, wobei jeder Halteblock (52) wenigstens einen Windungsabschnitt (20) umgreift.

13. Abgasheizer nach Anspruch 6 und Anspruch 12, **dadurch gekennzeichnet, dass** der Haltebügel (66) die Mehrzahl von Halteblöcken (52) an ihrer von dem Träger (22) abgewandten Seite übergreift, oder/und dass der Haltebügel (66) sich entlang der Mehrzahl von Halteblöcken (52) im Wesentlichen radial erstreckt.

14. Abgasheizer nach einem der vorangehenden Ansprüche, **dadurch gekennzeichnet, dass** der Träger (22) eine Mehrzahl von mit Umfangsabstand zueinander angeordneten und einen Zentralbereich (26) mit einem Außenumfangsbereich (26) verbindenden Verbindungsstegen (36) umfasst, wobei zwischen in Umfangsrichtung einander unmittelbar benachbarten Verbindungsstegen (36) Durchströmöffnungen (38) gebildet sind, wobei wenigstens eine Halteeinheit (50) im Bereich eines Verbindungsstegs (36) angeordnet ist.

15. Abgasanlage, umfassend eine vorzugsweise rohrartige Abgasführungskomponente und einen in der Abgasführungskomponente angeordneten Abgasheizer (14) nach einem der vorangehenden Ansprüche.

## Claims

1. An exhaust gas heater for an exhaust gas system of a combustion engine, comprising:
- a carrier (22),
- a heating conductor (42) carried on the carrier (22), wherein the heating conductor (42) comprises a heating region (44) arranged on an axial side of the carrier (22), wherein the heating conductor (42) is electrically uninsulated in its heating region (44) at least in part,
- a holding arrangement (16) having at least one holding unit (50) which holds the heating conductor (42) on the carrier (22) in its heating region (44),
wherein the at least one holding unit (50) comprises at least one electrically conducting holding block (52) which is in contact with the heating conductor (42) in an electrically uninsulated region of the heating region (44), wherein the at least one holding block (52) is electrically insulated with respect to the carrier (22), **characterized in that** the at least one holding block (52) comprises two holding block parts (54, 56) which receive the heating region (44) between them.

2. The exhaust gas heater as claimed in claim 1, **characterized in that** the at least one holding block (52) has a heating conductor receiving recess (62) which receives the heating conductor (42),
preferably wherein an inner contour of the heating conductor receiving recess (62) is adapted to an outer circumferential contour of the heating conductor (42).

3. The exhaust gas heater as claimed in claim 2, **characterized in that** a portion (58, 60) of the heating conductor receiving recess (62) is formed in each of the holding block parts (54, 56).

4. The exhaust gas heater as claimed in one of the preceding claims, **characterized in that** the at least one holding block (52) is constructed of metal material, preferably steel material, or/and that the at least one holding block (52) has a resistivity of less than 1 Ωmm²/m.

5. The exhaust gas heater as claimed in claim 4, **characterized in that** insulating material (64) is arranged between the at least one holding block (52) and the carrier (22).

6. The exhaust gas heater as claimed in one of the preceding claims, **characterized in that** the at least one holding block (52) is held on the carrier (22) by a holding stirrup (66).

7. The exhaust gas heater as claimed in claim 6, **characterized in that** the holding stirrup (66) is in the form of a metal component, preferably a shaped sheet-metal part, and that insulating material (68) is arranged between the at least one holding block (52) and the holding stirrup (66).

8. The exhaust gas heater as claimed in claim 5 or claim 7, **characterized in that** the insulating material (64, 68) comprises ceramics material or mica material.

9. The exhaust gas heater as claimed in claim 6, 7 or 8, **characterized in that** the holding stirrup (66) is fixed to the carrier by at least one fastening member (70), preferably a threaded bolt.

10. The exhaust gas heater as claimed in one of the preceding claims, **characterized in that** the carrier (22) is in the form of a metal component, preferably a shaped sheet-metal part.

11. The exhaust gas heater as claimed in one of the preceding claims, **characterized in that** the heating conductor (42) is spirally wound in its heating region (44) and comprises a plurality of winding portions (20) located in a radially staggered manner.

12. The exhaust gas heater as claimed in claim 11, **characterized in that** at least one holding unit (50) comprises a plurality of holding blocks (52), wherein each holding block (52) engages around at least one winding portion (20).

13. The exhaust gas heater as claimed in claim 6 and claim 12, **characterized in that** the holding stirrup (66) engages over the plurality of holding blocks (52) on their side remote from the carrier (22), or/and wherein the holding stirrup (66) extends substantially radially along the plurality of holding blocks (52).

14. The exhaust gas heater as claimed in one of the preceding claims, **characterized in that** the carrier (22) comprises a plurality of connecting webs (36) which are arranged at a circumferential distance from one another and connect a central region (26) with an outer circumferential region (26), wherein throughflow openings (38) are formed between connecting webs (36) that are directly adjacent to one another in the circumferential direction, wherein at least one holding unit (50) is arranged in the region of a connecting web (36).

15. An exhaust gas system, comprising a preferably tubular exhaust gas routing component and an exhaust gas heater (14) as claimed in one of the preceding claims arranged in the exhaust gas routing component.

## Revendications

1. Un réchauffeur de gaz d'échappement pour un système de gaz d'échappement d'un moteur à combustion, comprenant :
- un support (22),
- un conducteur de chauffage (42) porté sur le support (22), dans lequel le conducteur de chauffage (42) comprend une zone de chauffage (44) disposée sur un côté axial du support (22), dans lequel le conducteur de chauffage (42) n'est pas isolé électriquement dans sa zone de chauffage (44), au moins en partie,
- un dispositif de maintien (16) comprenant au moins une unité de maintien (50) qui maintient le conducteur de chauffage (42) sur le support (22) dans sa zone de chauffage (44),
dans lequel ledit au moins une unité de maintien (50) comprend au moins un bloc de maintien (52) conducteur d'électricité qui est en contact avec le conducteur de chauffage (42) dans une zone non isolée électriquement de la zone de chauffage (44), dans lequel ledit au moins un bloc de maintien (52) est isolé électriquement par rapport au support (22),
**caractérisé en ce que** ledit au moins un bloc de maintien (52) comprend deux parties de bloc de maintien (54, 56) recevant la zone de chauffage (44) entre elles.

2. Le réchauffeur de gaz d'échappement selon la revendication 1, **caractérisé en ce que** ledit au moins un bloc de maintien (52) comprend une cavité de réception du conducteur de chauffage (62) recevant le conducteur de chauffage (42),
de préférence, dans lequel un contour intérieur de la cavité de réception du conducteur de chauffage (62) est adapté à un contour circonférentiel extérieur du conducteur de chauffage (42).

3. Le réchauffeur de gaz d'échappement selon la revendication 2, **caractérisé en ce qu'**une partie (58, 60) de la cavité de réception du conducteur de chauffage (62) est formée dans chacune des parties du bloc de maintien (54, 56).

4. Le réchauffeur de gaz d'échappement selon l'une des revendications précédentes, **caractérisé en ce que** ledit au moins un bloc de maintien (52) est construit en matériau métallique, de préférence en acier, ou/et dans lequel ledit au moins un bloc de maintien (52) a une résistivité inférieure à 1 Ωmm²/m.

5. Le réchauffeur de gaz d'échappement selon la revendication 4, **caractérisé en ce que** du matériau isolant (64) est disposé entre ledit au moins un bloc de maintien (52) et le support (22).

6. Le réchauffeur de gaz d'échappement selon l'une des revendications précédentes, **caractérisé en ce que** ledit au moins un bloc de maintien (52) est maintenu sur le support (22) par un étrier de maintien (66).

7. Le réchauffeur de gaz d'échappement selon la revendication 6, **caractérisé en ce que** l'étrier de maintien (66) se présente sous la forme d'une pièce métallique, de préférence une pièce de tôle façonnée, et que du matériau isolant (68) est disposé entre ledit au moins un bloc de maintien (52) et l'étrier de maintien (66).

8. Le réchauffeur de gaz d'échappement selon la revendication 5 ou la revendication 7, **caractérisé en ce que** le matériau isolant (64, 68) comprend un matériau céramique ou un matériau en mica.

9. Le réchauffeur de gaz d'échappement selon la revendication 6, 7 ou 8, **caractérisé en ce que** l'étrier de maintien (66) est fixé au support par au moins un élément de fixation (70), de préférence un boulon fileté.

10. Le réchauffeur de gaz d'échappement selon l'une des revendications précédentes, **caractérisé en ce que** le support (22) se présente sous la forme d'un élément métallique, de préférence une pièce de tôle façonnée.

11. Le réchauffeur de gaz d'échappement selon l'une des revendications précédentes, **caractérisé en ce que** le conducteur de chauffage (42) est enroulé en spirale dans sa zone de chauffage (44) et comprend une pluralité de parties d'enroulement (20) situées en quinconce dans le sens radial.

12. Le réchauffeur de gaz d'échappement selon la revendication 11, **caractérisé en ce qu'**au moins une unité de maintien (50) comprend une pluralité de blocs de maintien (52), chaque bloc de maintien (52) s'engageant autour d'au moins une partie d'enroulement (20).

13. Le réchauffeur de gaz d'échappement selon la revendication 6 et la revendication 12, **caractérisé en ce que** l'étrier de maintien (66) s'engage sur la pluralité de blocs de maintien (52) sur leur côté éloigné du support (22), ou/et **en ce que** l'étrier de maintien (66) s'étend sensiblement radialement le long de la pluralité de blocs de maintien (52).

14. Le réchauffeur de gaz d'échappement selon l'une des revendications précédentes, **caractérisé en ce que** le support (22) comprend une pluralité de traverses de connexion (36) qui sont disposées à une distance circonférentielle les unes des autres et relient une région centrale (26) à une région circonférentielle extérieure (24), dans lequel des ouvertures de passage (38) sont formées entre les traverses de connexion (36) qui sont directement adjacentes les unes aux autres dans la direction circonférentielle, dans lequel au moins une unité de maintien (50) est disposée dans la région d'une traverse de connexion (36).

15. Système de gaz d'échappement comprenant un élément d'acheminement des gaz d'échappement, de préférence tubulaire, et un réchauffeur de gaz d'échappement (14) tel que décrit dans l'une des revendications précédentes, disposé dans l'élément d'acheminement des gaz d'échappement.
